# EUROPEAN PATENT APPLICATION

(11) **EP 4 439 459 A1**
(43) Date of publication of application: **02.10.2024**
(21) Application number: 24157239.5
(22) Date of filing: 13.02.2024
(51) Int. Cl.: G06T 7/292, G06T 7/80

(54) **MATCHING DATA BETWEEN IMAGES FOR USE IN EXTRINSIC CALIBRATION OF MULTI-CAMERA SYSTEM**

(30) Priority: 17.03.2023 SE 2350305
(71) Applicant: Sony Group Corporation, Tokyo 108-0075 (JP)
(72) Inventor: HUANG, Sangxia, Basingstoke, RG22 4SB (GB)
(74) Representative: Neij & Lindberg AB

(57) **Abstract**

A device performs extrinsic calibration of a multi-camera system comprising first and second cameras. The device obtains image sequences [I1], [I2] taken by the respective camera, processes [I1], [I2] for detection of first and second movement tracks [T1], [T2], and evaluates [T1] in relation to [T2] to determine candidate track pairs, [CTP], each candidate track pair in [CTP] being deemed to originate from a common object. The device processes [CTP] to determine calibration items [CI], with each calibration item in [CI] representing a relative position between the cameras, and operates [CI] on a respective candidate track pair in [CTP] to generate match scores [MS]_i. The device aggregates match scores in [MS]_i to determine a total score TS_i for the respective candidate track pair, determines final track pairs [FTP] among [CTP] based on TS_i for the respective candidate track pair, and determines final calibration data FCD that represents the relative position between the cameras based on [FTP].

## Description

### Technical Field

The present disclosure relates generally to calibration of multi-camera systems and, in particular, to a technique of matching data between images from a plurality of cameras for use in extrinsic calibration of the plurality of cameras.

### Background Art

Recovering 3D position and/or 3D pose of objects from images has been a longstanding problem in computer vision. Techniques for 3D positioning and pose determination have a variety of applications such as 3D vision inspection, product assembly, goods inspection, human-computer interaction, video surveillance, sports broadcasting, industry robot control, navigation, etc.

One common solution is to use multiple cameras with overlapping fields of view and process individual video streams from the cameras for detection of keypoints, identify correspondence between keypoints in different views, and calculate 3D positions based on the correspondence between keypoints, and optionally temporal information. For such calculation, calibration data representing the position and orientation of the cameras needs to be known with reasonable accuracy. The determination of the calibration data is known as "extrinsic calibration" in the art.

It has been proposed, for example in EP3883857, to perform the extrinsic calibration by observing a human individual by the multiple cameras, and specifically to calculate the calibration data based on keypoints that are detected in images of an individual and associated between the cameras. This approach allows the extrinsic calibration to be automated and re-calibration of the system to be performed by simply observing an individual moving around in front of the cameras.

Most existing techniques for extrinsic calibration are limited to a single individual moving in front of the cameras, or are at least not optimized to handle more than one individual. In practice, it may be difficult to avoid that more than one individual is detected by the cameras during image acquisition, for example in a public space. Even if a single individual walks around in front of the cameras, other people may be visible in the background. Presence of mirrors or windows within the scene may also duplicate an individual by reflection to the cameras, causing errors when keypoints are associated between images.

It is generally desirable to provide a technique for extrinsic calibration that is adapted to handle presence of more than one individual in the image data from the cameras. This would facilitate the image acquisition phase. It is even more preferable to provide a calibration technique that is configured to use keypoints from more than one individual when determining the calibration data. Such a calibration technique would increase the efficiency of the image acquisition phase, since more individuals result in more keypoints per unit time.

The foregoing is not limited to extrinsic calibration based on images of human individuals but is equally applicable when the images contain any other type of moving objects that are used as references for extrinsic calibration.

### Brief Summary

It is an objective to at least partly overcome one or more limitations of the prior art.

Another objective is to provide a technique for preparing input data for extrinsic calibration that is capable of handling presence of multiple objects in images from cameras to be calibrated.

Yet another objective is to provide such a technique that prepares the input data to represent the multiple objects.

A further objective is to provide such a technique that is automated and robust.

One or more of these objectives, as well as further objectives that may appear from the description below, are at least partly achieved by a computer-implemented method for extrinsic calibration of a plurality of cameras, a computer-readable medium, and a device according to the independent claims, embodiments thereof being defined by the dependent claims.

Still other objectives, as well as features, aspects and technical effects will appear from the following detailed description, from the attached claims as well as from the drawings.

### Brief Description of Drawings

FIG. 1A is a perspective view of an example installation of a multi-camera system, FIG. 1B exemplifies object detection data generated in the system, FIG. 1C exemplifies keypoints detected for a human object, and FIG. 1D illustrates a view of one of the cameras in the system onto the scene.
FIG. 2 is a flow chart of an example method for extrinsic calibration of cameras in a multi-camera system.
FIG. 3A illustrates scene points triangulated from keypoints in camera views, and FIG. 3B illustrates reprojection in epipolar geometry.
FIG. 4A is a flow chart of an example method for determining pairs of movement tracks between views, and FIG. 4B is a block diagram of an example system for performing the method of FIG. 4A.
FIG. 5A is a flow chart of an example procedure for determining candidate track pairs in the method of FIG. 4A, and FIG. 5B shows an example of tracks being matched between two views.
FIGS 6A-6D are flow charts of example procedures in the method of FIG. 4A, and FIG. 6E is a block diagram of an example system for performing the procedures in FIGS 6A-6B.
FIGS 7A-7B are flow charts of validation procedures for use in the method of FIG. 4A, and FIGS 7C-7D show examples of graphs generated by the validation procedures in FIGS 7A-7B.
FIG. 8 is a flow chart of the procedure in FIG. 6D in accordance with an implementation example.
FIG. 9 is a flow chart of a procedure corresponding to a sequence of steps in the method of FIG. 4A in accordance with an implementation example.
FIG. 10 is a block diagram of a machine that may implement methods and procedures in accordance with embodiments.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

As used herein, the terms "multiple", "plural" and "plurality" are intended to imply provision of two or more elements, unless stated otherwise. The term a "set" of elements is intended to imply a provision of one or more elements. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

While operations are depicted in the drawings in a particular order, this should not be understood as requiring that such operations be performed in the particular order shown or in sequential order, or that all illustrated operations be performed, to achieve desirable results.

Like reference signs refer to like elements throughout.

Before describing embodiments in more detail, a few definitions will be given.

As used herein, "object" denotes any animate or inanimate object that may be represented by a set of keypoints in an image. Examples of animate objects include human individual and animals. Examples of inanimate objects include different types of vehicles, such as cars, bicycles, motorcycles, etc., as well as buildings, fences, furniture, interior decoration, exercise equipment, etc.

As used herein, "scene" denotes a three-dimensional (3D) space that is collectively monitored by cameras, which have at least partly overlapping fields of views.

As used herein, "camera" is an imaging device configured to generate images of a scene by detection of electromagnetic waves and/or mechanical waves that are generated and/or reflected by the scene and objects therein. The camera may be responsive to electromagnetic waves in any wavelength range, including but not limited to ultraviolet, visible or infrared radiation, or any part or combination thereof. The camera may be configured to produce still images or a digital video stream, i.e. a coherent time sequence of images. The respective image is a two-dimensional (2D) representation of the scene, or part thereof, as seen by the camera. The image is typically a digital image.

As used herein, "view" or "camera view" refers to the part of the scene that is included within the field of view of a camera.

As used herein, "field of view" has its conventional meaning and denotes the extent of the scene that is observed by the respective camera at any given moment and may be defined as a solid angle through which the camera is sensitive to the electromagnetic/mechanical waves.

As used herein, "keypoint" has its conventional meaning in the field of computer vision and is also known as an interest point. A keypoint is a spatial location or point in an image that defines what is interesting or what stand out in the image and may be defined to be invariant to image rotation, shrinkage, translation, distortion, etc. More generally, a keypoint may be denoted a "feature point" on an object to be detected in the image, with the feature point having a predefined placement on the object. Keypoints may be defined for a specific type of object, for example a human body, a part of the human body, or an inanimate object with a known structure or configuration. In the example of a human body, keypoints may identify one or more joints and/or extremities. Keypoints may be detected by use of any existing feature detection algorithm(s), for example image processing techniques that are operable to detect one or more of edges, corners, blobs, ridges, etc. in digital images. Non-limiting examples of feature detection algorithms comprise SIFT (Scale-Invariant Feature Transform), SURF (Speeded Up Robust Feature), FAST (Features from Accelerated Segment Test), SUSAN (Smallest Univalue Segment Assimilating Nucleus), Harris affine region detector, and ORB (Oriented FAST and Rotated BRIEF). Further information about conventional keypoint detectors is found in the article "Local invariant feature detectors: a survey", by Tuytelaars et al, published in Found. Trends. Comput. Graph. Vis. 3(3), 177-280 (2007). Further examples of feature detection algorithms are found in the articles "Simple Baselines for Human Pose Estimation and Tracking", by Xiao et al, published at ECCV 2018, and "Deep High-Resolution Representation Learning for Human Pose Estimation", by Sun et al, published at CVPR 2019. Correspondingly, objects may be detected in images by use of any existing object detection algorithm(s). Non-limiting examples include various machine learning-based approaches or deep learning-based approaches, such as Viola-Jones object detection framework, SIFT, HOG (Histogram of Oriented Gradients), Region Proposals (RCNN, Fast-RCNN, Faster-RCNN), SSD (Single Shot MultiBox Detector), You Only Look Once (YOLO, YOLO9000, YOLOv3), and RefineDet (Single-Shot Refinement Neural Network for Object Detection).

As used herein, "scene point" is any point in a scene that is included and detectable as a keypoint in two or more camera views. The scene point has a three-dimensional (3D) location in a common coordinate system.

As used herein, "common coordinate system" refers to a reference system that uniquely defines the 3D location of a scene point in relation to an origin.

As used herein, "pose" refers to a data set that defines the posture of an object. A "2D pose" represents the posture of the object in a view and is given by a collection of keypoints in the view. A "3D pose" represent the posture of the object in a scene and is given by a collection of scene points.

As used herein, "calibration data" refers to one or more parameters that define the positions and orientations of the cameras monitoring the scene. The calibration data may be relative or absolute. In some embodiments, the calibration data comprises a so-called camera projection matrix ("camera matrix") for the respective camera. Such a camera matrix may or may not comprise inner ("intrinsic") parameters of the respective camera. In some embodiments, the camera matrix for a camera i is defined as ***Pᵢ*** = ***Kᵢ***[***Rᵢ Tᵢ***], with ***Kᵢ*** being the intrinsic matrix of the camera, ***Rᵢ*** being a rotation matrix, and ***Tᵢ*** being a translation vector. In some embodiments, the intrinsic matrix is known for the respective camera.

The "relative position" between pairs of cameras, as used herein, relates to the position and orientation of one of the cameras in relation to the other. The relative position may be given by a set of spatial metrics such as angles and/or distances. In some embodiments, the relative position is represented as an essential matrix or a fundamental matrix, as is well-known the art.

Embodiments are related to extrinsic calibration of a multi-camera system based on one or more objects detected by the cameras in the system. The following description will be given for objects in the form of human individuals, but the disclosure may be applied to any type of object, be it animate or inanimate.

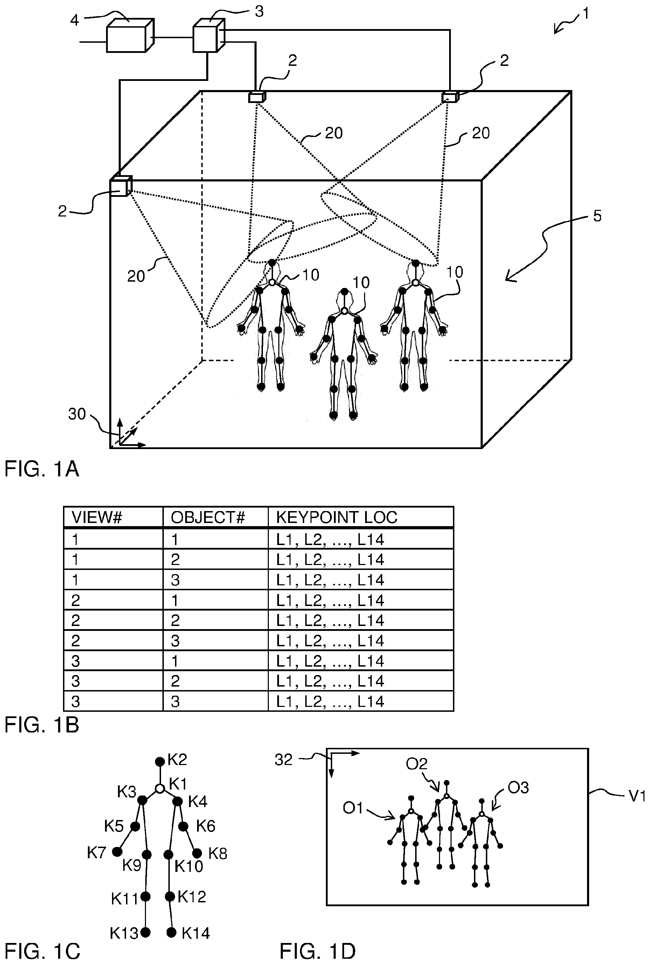

FIG. 1A shows an example arrangement of an example multi-camera system 1, denoted "monitoring system" in the following. The monitoring system 1 is arranged to monitor a scene 5. In the illustrated example, three individuals 10 are in the scene 5. The system 1 comprises a plurality of cameras 2 which are oriented with their respective field of view 20 towards the scene 5. The scene 5 is associated with a fixed 3D coordinate system 30, which is denoted "scene coordinate system" or "common coordinate system" herein. The cameras 2 may be fixed or moveable. When the system 1 has been calibrated, the positions and orientations of the cameras 2 in relation to each other are known for each image taken. The cameras 2 may be synchronized to capture a respective image at approximately the same time, or at least with a maximum time difference which depends on the expected maximum speed of movement of the objects 10. Images taken by different cameras at approximately the same time may be assigned a common time stamp or time ID. In one example, a maximum time difference of 0.1-0.5 seconds may provide sufficient accuracy for normal human motion. The cameras 2 are oriented with overlapping fields of view 20 and thus produce at least partly overlapping images of the scene 5.

The images captured by the respective camera 2 are received by a detection device 3, which is configured to determine one or more keypoints of one or more objects in the respective image. The detection device 3 may implement any conventional object detection technique for identifying objects of a generic or specific type in the respective image and may implement any conventional feature detection technique for identifying one or more keypoints of the respective object, for example as described hereinabove. The detection device 3 may also pre-process the incoming images, for example for noise reduction, contrast enhancement, etc. In an alternative configuration, the monitoring system 1 comprises a plurality of detection devices 3, for example one for each camera 2, where the detection devices 3 may be co-located or integrated with the cameras 2.

The detection device 3 produces object detection data, which identifies one or more keypoints of one or more objects detected in the respective image. The object detection data is denoted ODD in the following. An example of the ODD is shown in FIG. 1B. Although FIG. 1B illustrates a table, the ODD may be given in any format. In the illustrated example, the ODD represents each camera (view) by a respective view identifier (1-3 in FIG. 1B) and each object by a respective object identifier (1-3 in FIG. 1B), and comprises a keypoint position for each keypoint detected for the respective object (L1-L14 in FIG. 1B). An example of keypoints K1-K14 that may be detected for a human individual is shown in FIG. 1C. However, any number of keypoints may be detected depending on implementation. One or more of the keypoints may be designated as a main keypoint. The main keypoint may be identifiable with greater accuracy than other key points and/or may have a specific location within the object, for example close to its center. In the schematic example of FIG. 1C, the main keypoint K1 is indicated by an open circle and corresponds to the neck of the respective individual.

The detection device 3 is configured to detect a predefined number of keypoints of the respective object. If a keypoint is not detected, the detection device 3 may enter a predefined value (for example, a null value) into the ODD. The detection device 3 may also include a confidence score for each object and/or keypoint in the ODD, the confidence score representing a level of certainty for the respective detection. FIG. 1D shows an example image captured by one of the cameras 2 in FIG. 1A and represents three detected objects O1, O2 and O3 with associated keypoints. The detected position of the respective keypoint is given by 2D coordinates in a local and fixed coordinate system 32 of the view V1.

The system 1 further comprises a positioning device 4, which is configured to operate on the ODD to compute, and possibly track over time, one or more 3D positions of the individual(s) 10 in the scene 5. The 3D positions may be given in the scene coordinate system 30 and are denoted "scene points" in the following. The scene points, when representing an object (for example, a human individual), defines a "3D pose" of the object. The positioning device 4 may compute the scene points by conventional triangulation.

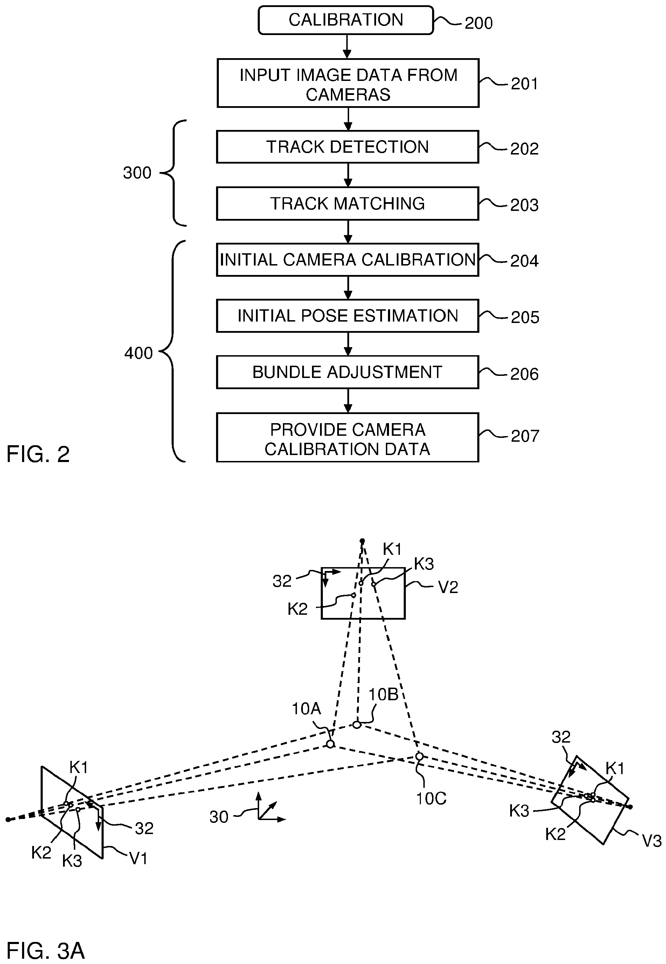

FIG. 3A shows an example of triangulation of scene points 10A-10C in the scene coordinate system 30 based on the locations of keypoints K1-K3 in relation to the respective local coordinate system 32 in views V1, V2, V3 of three cameras. The scene points 10A-10C are computed by identifying intersections of rays that extend from camera centers through the respective keypoint K1-K3 in the views V1, V2, V3. The triangulation may be implemented to also to account for observation errors in the keypoint locations and may operate on keypoints from any number of views. There are numerous available triangulation methods that may be implemented by the positioning device 4, including but not limited to so-called linear methods, optimal methods or branch-and-bound search methods. Generally, the triangulation operates on the calibration data that represents the positions and orientations of the cameras.

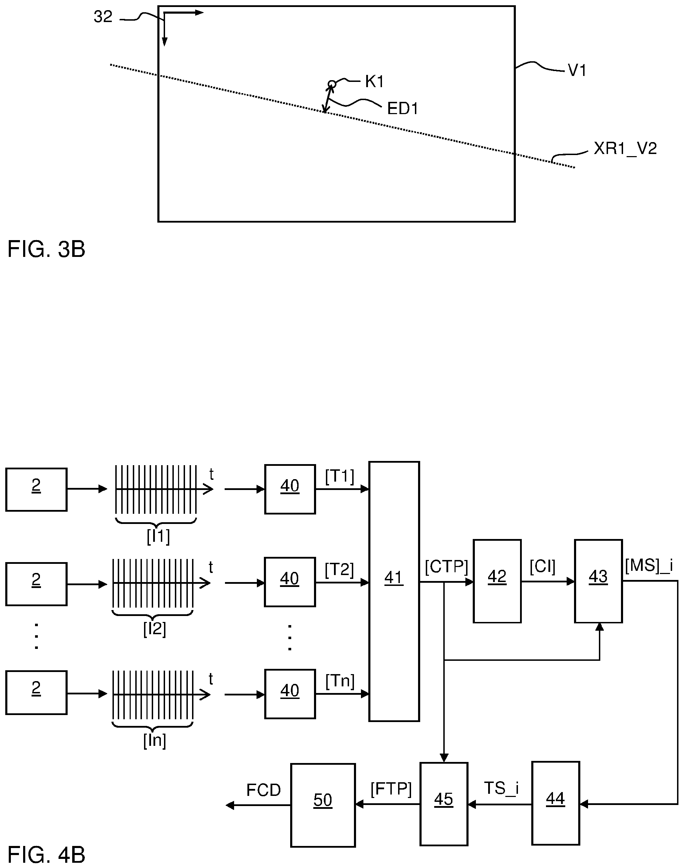

FIG. 3B illustrates a common technique of quantifying errors in triangulation using "reprojection". FIG. 3B shows an example of reprojection in epipolar geometry. As known in the art, using epipolar geometry, a keypoint in one view may be reprojected as a line in another view by the use of the calibration data. In FIG. 3B, it is assumed that the keypoint K1 in view V1 has an associated keypoint in a view V2 (not shown). The line XR1_V2 represents the reprojection line ("epipolar line") for the keypoint in view V2. In FIG. 3B, ED1 designates a distance between K1 and XR1_V2 in the local coordinate system 32 of view V1. Often, a so-called symmetric epipolar distance (SED) is calculated to quantify the quality of the calibration data using the observations from the two views. The SED for two corresponding (associated) keypoints in first and second views is commonly given as the sum of the squared distance between the epipolar line of a keypoint in the second view and the corresponding keypoint in the first view, and the squared distance between the epipolar line of the keypoint in the first view and the keypoint in the second view. It is realized that SED may be calculated for individual scene points given by pairs of corresponding keypoints in the first and second views. The SED is an example of a reprojection distance that may be calculated to quantify the quality of the calibration data using the observations from the two views. Any conventional reprojection distance may be used within the context of the present disclosure. In another example, a scene point is calculated for a pair of corresponding keypoints by use of the calibration data, the scene point is reprojected onto the first and second views, and the distances between the respective keypoint and its reprojected scene point in the views are determined, and a combination of these distances is used as a reprojection distance for the scene point.

Another commonly used metric for quantifying errors in triangulation is the "inlier count", which is the number of scene points that yield a reprojection distance below a distance threshold. It is also conceivable to define an "inlier fraction" that represents the inlier count relative to the total number of scene points for the first and second views.

FIG. 2 is a flow chart of an example method 200 for generating calibration data for cameras in a monitoring system, for example the system 1 in FIG. 1A. In the example of FIG. 1A, the calibration method 200 may be performed jointly by the detection device 3 and the positioning device 4. Alternatively, at least part of the calibration method may be performed by a dedicated device, which may be connected to receive the ODD from the detection device 3 and/or the images from the cameras 2 and may provide the resulting calibration data to the positioning device 4.

In step 201, image data is received from the cameras. The image data may be in form of raw image data from the respective camera, or a processed version of the raw data. The image data represents or comprises a time sequence of images that are generated by the respective camera during an observation time window.

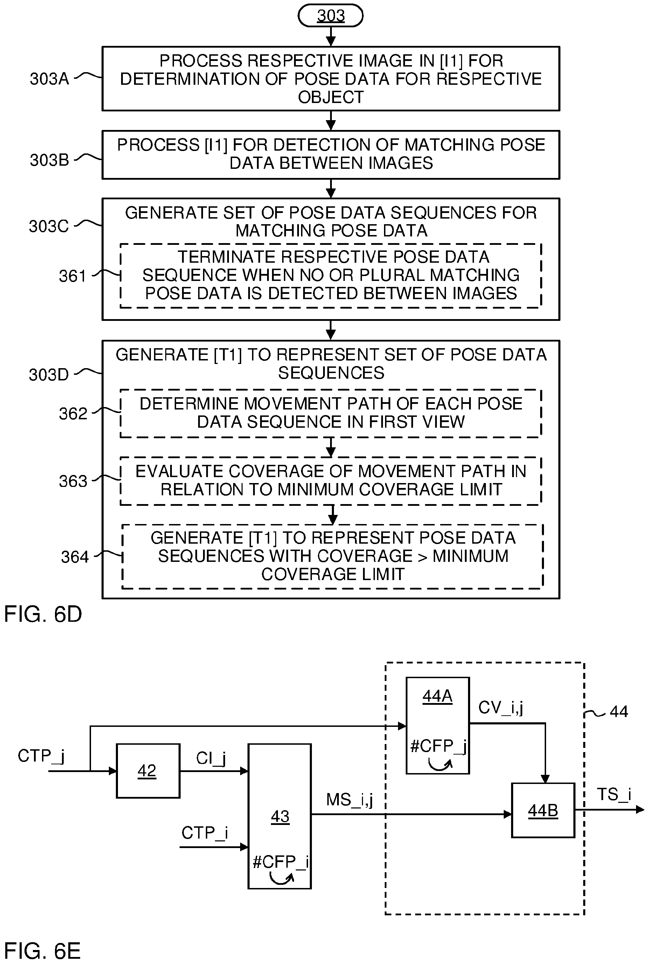

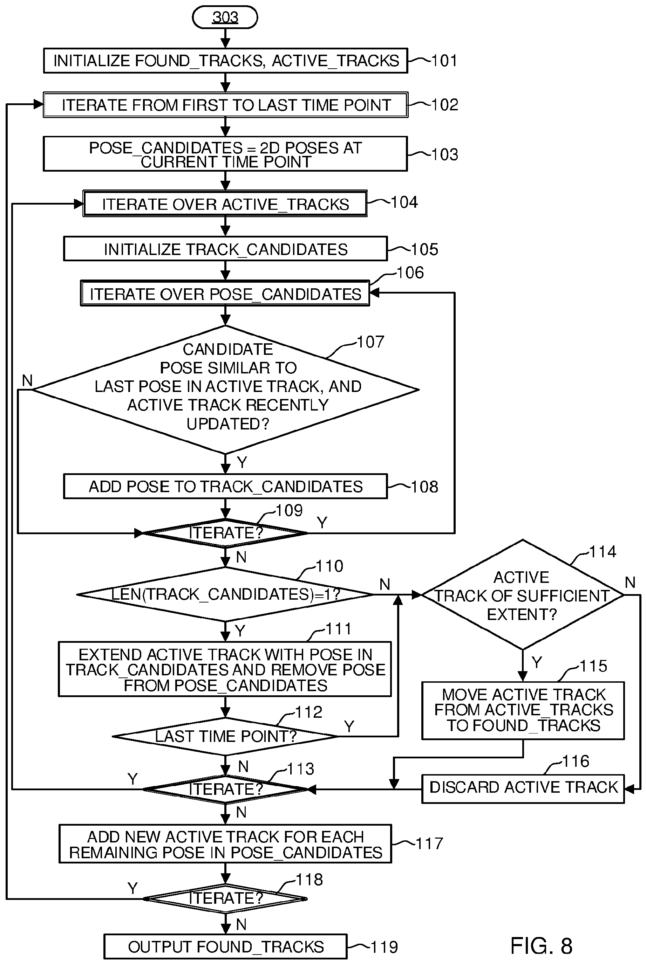

In step 202, the image data from the respective camera is processed for generation of at least one track ("movement track") for each object that is detected in the image data. In some embodiments, one track is generated for each object and represents the 2D pose of the object as a function of time. For example, the track may be given as a list of 2D poses at consecutive time points. The time points may be given by time stamps or time IDs assigned to the images. The respective 2D pose is given by the locations of a set of keypoints of an object in an image. In step 202, the 2D pose is detected by processing the image for keypoint detection, resulting in the above-mentioned keypoints and keypoint locations, for example as shown by ODD in FIG. 1B. The generation of tracks based on detected 2D poses will be exemplified below with reference to FIGS 6D and 8. The keypoint detection in step 202 may involve any conventional object detection technique and/or feature detection technique, for example as described hereinabove. In one example, a human pose estimation algorithm may be operated on the image data from the respective camera. Such algorithms are configured to detect people in an image or a time sequence of images, and output the location of joints and extremities of the detected people. It may be noted that it is not necessary to use all available keypoints for calibration. For example, keypoints that are expected to have larger observation errors may be excluded. For a human individual, keypoints representing ears, feet, hands, etc. may be excluded.

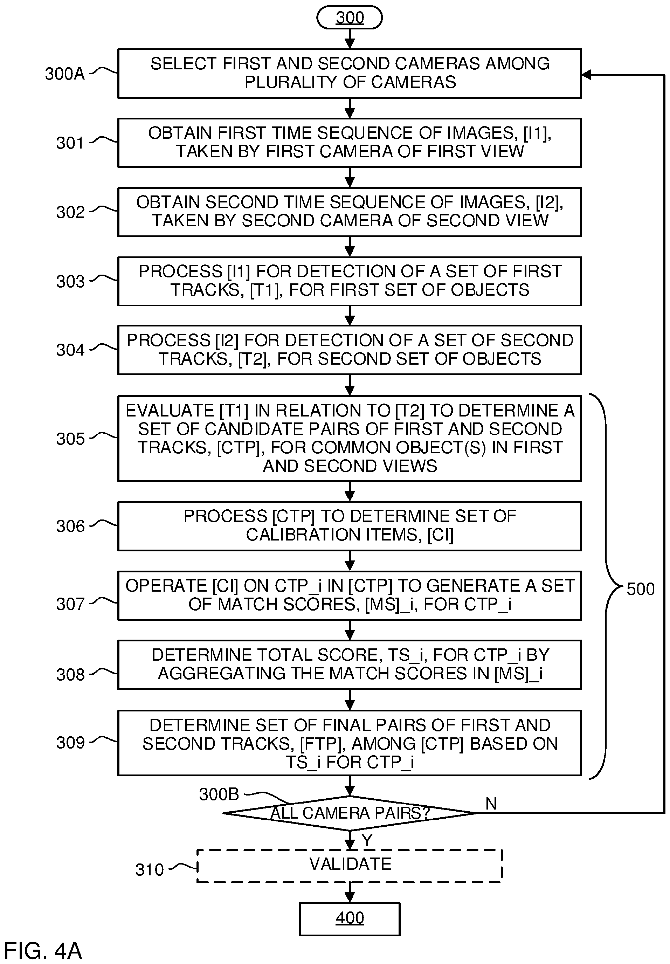

In step 203, the tracks generated in step 202 are processed to associate or match tracks between the views of the cameras. Step 203 is exemplified further below with reference to FIGS 4A, 6A-6C and 9. Step 203 results in a set of associated tracks between each pair of cameras. Inherently, this corresponds to associated keypoints between images taken by each pair of cameras. Thus, step 203 results in a plurality of associated keypoints.

In step 204, the associated keypoints are processed for calculation of preliminary calibration data for the cameras. There are existing techniques for calculating the preliminary calibration data, for example so-called Structure from Motion (SfM) algorithms.

In step 205, the associated keypoints are processed for calculation of a preliminary 3D pose for the respective object in the scene 5 at one or more time points (cf. individuals 10 in FIG. 1A), where each preliminary 3D pose is given by a respective set of scene points (cf. 10A-10C in FIG. 1B). In some embodiments, the preliminary pose is calculated by triangulation of a subset of the associated keypoints, and by use of the preliminary calibration data from step 204. If the preliminary calibration data is calculated based on a first subset of associated keypoints in step 204, it may be advantageous to calculate the preliminary pose(s) based on a second subset of associated keypoints in step 205, with at least part of the associated keypoints differing between the first and second subsets. Step 205 results in a set of preliminary 3D poses, one for each object and each time point. In some embodiments, the respective preliminary 3D pose may be represented by a pose vector of scene point locations.

In step 206, a so-called bundle adjustment is performed for the associated keypoints using the preliminary calibration data and the set of preliminary 3D poses as input. In this context, the bundle adjustment produces refined calibration data for the cameras. The bundle adjustment is a well-known technique of simultaneously refining scene points and calibration data in view of an optimization criterion. Conventionally, bundle adjustment involves minimizing an objective function that defines the above-mentioned total reprojection error. In such an objective function, the scene points and the calibration data are the unknown variables of the objective function. In bundle adjustment, the objective function may be optimized in an iterative fashion, with initial values ("starting values") for the calibration data and the pose being given by the preliminary calibration data and the set of preliminary 3D poses.

In step 207, the method 200 provides final camera calibration data, which is the refined calibration data produced by step 206, or a post-processed version thereof. In some embodiments, depending on the common coordinate system, the post-processing may be applied to convert the refined calibration data into a coordinate system with a coordinate axis perpendicular to the ground, for example by rotating the common coordinate system. In some embodiments, post-processing may be applied to estimate the scaling of the monitoring system, for example by detecting images of an object of known length, measuring the time it takes for an object travelling at known speed or acceleration between locations (for example, estimate initial height by measuring time it takes for an object to free fall to the ground), or manipulating images to position keypoints at known locations. The camera calibration data provided by step 207 may be used by the processing device 4 to compute the scene points when the system 1 is operated for monitoring the scene 5.

It is understood that the method 200 may be repeated to update the calibration data ("re-calibration"), for example to account for intentional or unintentional changes in the position and/or orientation of one or more of the cameras 2. Such re-calibration may be triggered based on image analysis. For example, in the example with human individuals, the positioning device 4 may analyze the distribution of the length of the limbs of individuals over time, to detect a need for re-calibration. If the monitoring system 1 is well calibrated, the distribution should have a small standard deviation. Thus, in one example, re-calibration may be trigged when the standard deviation for limb length exceeds a predefined threshold.

As indicated in FIG. 2, the method 200 may be seen to include a method or procedure 300 for generating associated keypoints in the form of pair-wise matched tracks ("set of final track pairs", [FTP]) based on image data from a plurality of cameras, and a method or procedure 400 for generating the camera calibration data based on the associated keypoints from the method/procedure 300. The following description will focus on embodiments of the method/procedure 300. The method/procedure 400 may be performed in accordance with the prior art, for example as described in aforesaid EP3883857, which is incorporated herein in its entirety by reference.

FIG. 4A is a flow chart of an example of the method 300 in FIG. 2. The method 300 is described in relation to a "first camera" and a "second camera". The first and second cameras may be any pair of cameras among the plurality of cameras to be calibrated. As indicated by steps 300A, 300B, steps 301-309 may be repeated for all pairs of cameras, to produce a set of final track pairs, [FTP], for each pair of cameras. The resulting sets of final track pairs for all camera pairs are then supplied to the method 400 for generation of camera calibration data, as indicated in FIG. 4A. Technically, [FTP] may be given as sets of associated keypoints, with each set of associated keypoints corresponding to an object in the scene. It is to be understood that camera pairs that are known to have non-overlapping views may be excluded from processing by steps 301-309 since they inherently will not result in any matched tracks.

The method 300 will be described with further reference to FIG. 4B, which is a block diagram of an example system for performing the method 300. The system in FIG. 4B is arranged to receive image data from n cameras and separately process the image data from pairs of cameras. The example system in FIG. 4B may be implemented on a data processing device.

In step 301, a first time sequence of images, [I1], taken by the first camera of a first view, is obtained. In FIG. 4B, the images of the first time sequence [I1] are represented as vertical lines on a time axis t.

In step 302, a second time sequence of images, [12], taken by the second camera of a second view, is obtained. As noted above, the second view at least partly overlaps the first view.

In step 303, [11] is processed for detection of a set of first movement tracks, [T1], for a set of objects in [I1], one first movement track for each detected object in [11]. Each movement track in [T1] comprises a plurality of positions ("first positions") within the first view. Typically, each first position corresponds to the location of a keypoint in the first view. As noted with reference to FIG. 2, each movement track may be given as a time sequence of 2D poses for an object. In a variant, the movement track represents a single keypoint for an object. The use of 2D poses increases the number of keypoints in [FTP] and may also facilitate the detection of tracks (cf. FIG. 6D, below). In FIG. 4B, step 303 is performed by sub-system 40 to produce [T1] from [11].

In step 304, [12] is processed for detection of a set of second movement tracks, [T2] for a set of objects in [I2], by complete analogy with step 303. Each movement track in [T2] comprises a plurality of positions ("second positions") within the second view. Typically, each second position corresponds to the location of a keypoint in the second view. In FIG. 4B, step 303 is performed by sub-system 40 to produce [T2] from [I2]. It is understood that instead of parallel sub-systems 40 as shown in FIG. 4B, steps 303 and 304 may be performed in sequence by one sub-system 40.

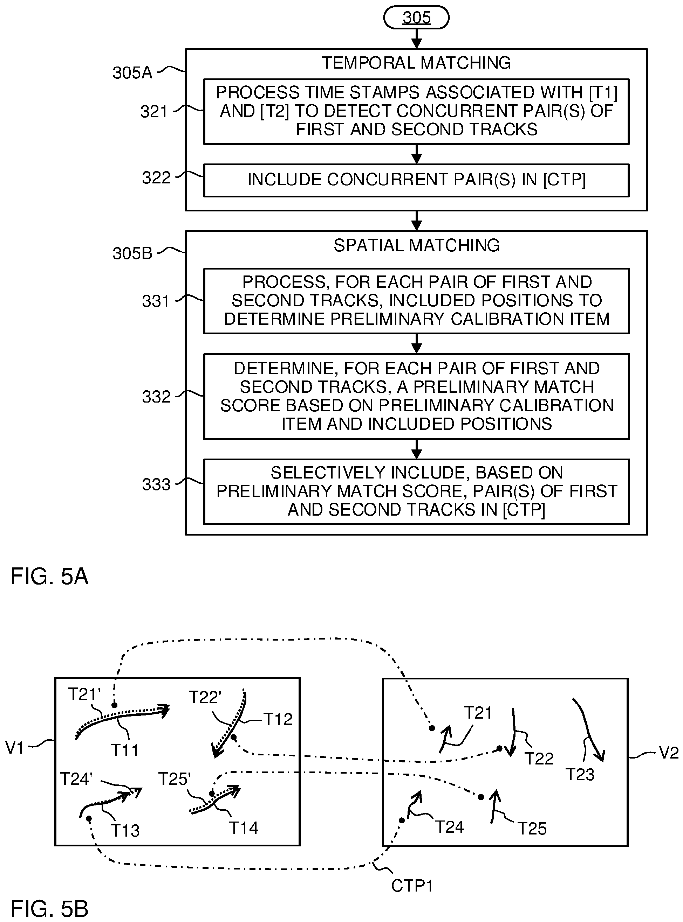

In step 305, [T1] from step 303 is evaluated in relation to [T2] from step 304 to determine a set of candidate track pairs, [CTP], of first and second movement tracks, where each candidate track pair in [CTP] is deemed to originate from a common object in the first and second views. In other words, step 305 finds all combinations of a first movement track in [T1] and a second movement track in [T2] that potentially have the same origin in the first and second views. In the following, a candidate track pair in [CTP] is also denoted CTP_i. It is to be understood that, for each CTP_i, keypoints are associated between the first and second views. Any suitable criterion for matching tracks between views may be applied by step 305. Examples are given below with reference to FIGS 5A-5B. In FIG. 4B, step 305 is performed by sub-system 41 to produce [CTP] from [T1] and [T2].

In step 306, [CTP] is processed to determine a set of calibration items, [CI], where each calibration item in [CI] represents a relative position between the first and second cameras. Each calibration item is calculated for a respective candidate pair, CTP_i, in [CTP]. The calibration items may be calculated by use of the above-mentioned SfM algorithm (step 204). In a non-limiting example, if the calibration item is an essential matrix for the cameras, step 306 may operate the well-known eight-point algorithm on the associated keypoints of CTP_i to generate the essential matrix. If the calibration item is a fundamental matrix, the well-known five-point algorithm may be used instead. Step 306 may evaluate the respective calibration item in relation to a quality criterion and refrain from adding calibration items that fail to meet the quality criterion to [CI]. For example, the quality criterion may be an inlier count or an inlier fraction. In FIG. 4B, step 306 is performed by sub-system 42 to generate [CI] from [CTP].

In step 307, [CI] is operated on each CTP_i in [CTP] to generate a set of match scores, [MS]_i, for this CTP_i. Each match score in [MS]_i is generated by operating a respective calibration item in [CI] on the associated keypoints of CTP_i. The match score is generated to represent the ability of the respective calibration item to spatially match the two tracks in CTP_i to each other. In other words, the match score represents a spatial difference (or equivalently, spatial similarity) when one of the tracks in CTP_i is mapped onto the other track in CTP_i by use of the calibration item. In FIG. 4B, step 307 is performed by sub-system 43 to generate [MS]_i from [CI] and [CTP]. Although not shown in FIG. 4B, it is understood that step 306 generates one [MS]_i for each CTP_i in [CTP].

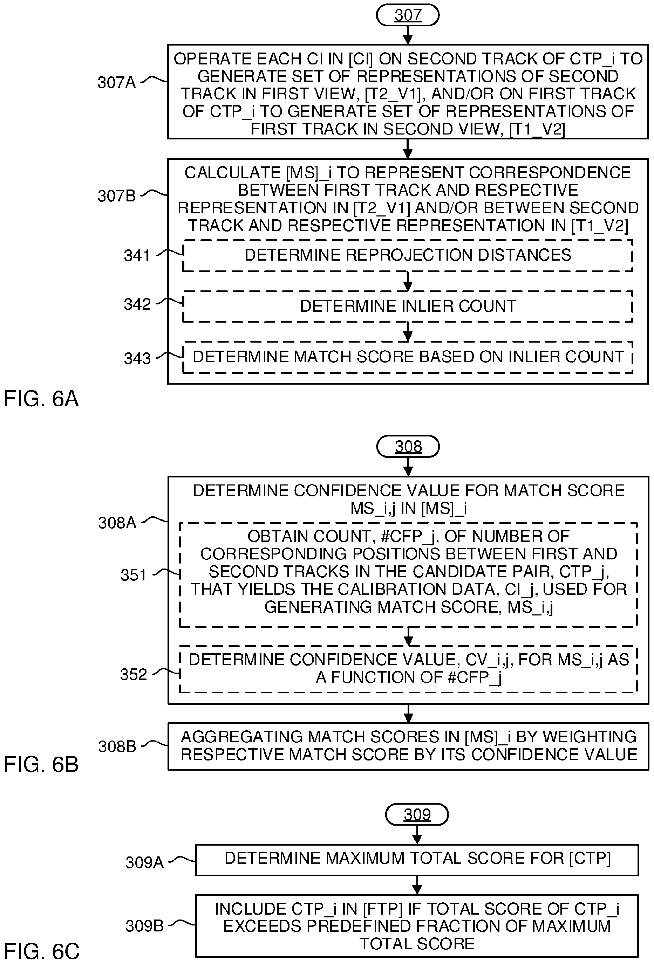

In step 308, a total score, TS_i, is determined for each CTP_i by aggregating the match scores in [MS]_i for the CTP_i. The aggregation may be done in any suitable way, for example by a (weighted) sum. An example is given below with reference to FIG. 6B. By step 308, the total score is generated be an aggregated measure of the degree of matching between the two tracks in CTP_i. In FIG. 4B, step 308 is performed by sub-system 44, which generates TS_i for each [MS]_i.

In step 309, a set of final track pairs, [FTP], is determined among [CTP] based on the TS_i for the respective CTP_i. A CTP_i may be selected to be included in [FTP] if its TS_i indicates a sufficient degree of matching between the two tracks in CTP_i. For example, a CTP_i may be included in [FTP] if its TS_i exceeds a threshold value, assuming that the degree of matching increases with increasing TS_i. The threshold value may be calculated based on the distribution of all total scores, for example as a function of the maximum, a certain percentile, etc.

In FIG. 4B, step 309 is performed by sub-system 45, which generates [FTP] from [CTP] and TS_i. As shown, the system may also include a sub-system 50 which is configured to perform the method 400 to generate final camera calibration data, FCD, for the plurality of cameras, based on [FTP].

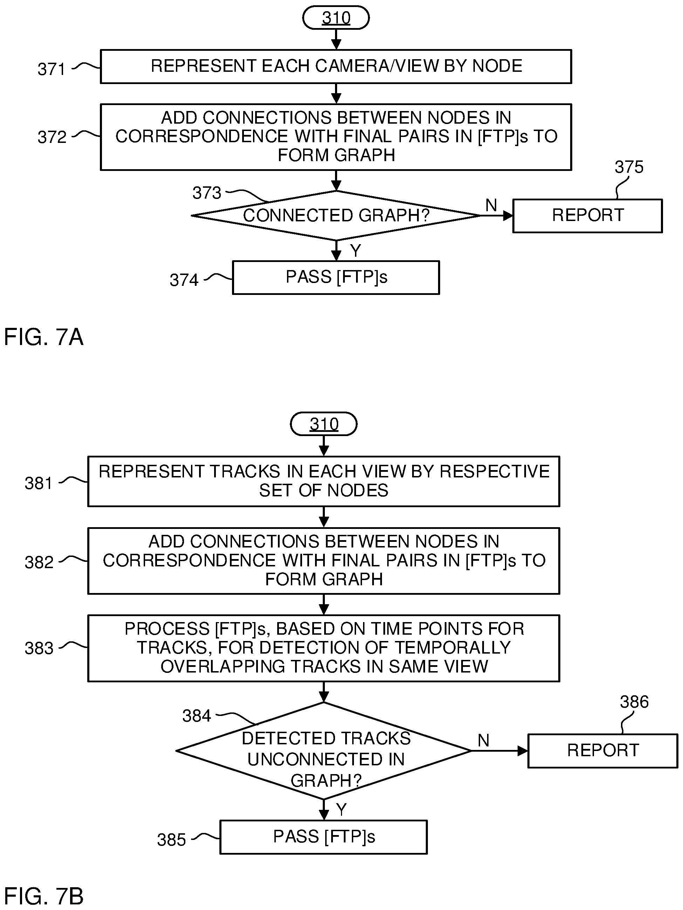

As indicated by dashed lines in FIG. 4A, the method 300 may include a validation step 310, in which the final track pairs in all [FTP]s are jointly evaluated to ensure that the [FTP]s are consistent with the set-up of the monitoring system. For example, the validation step 310 may be configured to verify that all cameras are represented in the [FTP]s and/or that the different concurrent tracks from the same camera are not associated in the [FTP]s, either directly by a final track pair or indirectly through a series of final track pairs. If the [FTP]s fails the validation in step 310, an error message may be output and the method 300 may be terminated. Examples of step 310 are given further below with reference to FIGS 7A-7D. In FIG. 4B, step 309 may be performed by sub-system 45.

The method 300 is specifically adapted to handle presence of multiple objects in image data from the cameras and, more specifically, to make keypoints of these multiple objects available for the extrinsic calibration to be performed by the procedure 400. The presence of multiple objects is handled by the formation of movement tracks or trajectories for each object in the images from the respective camera (steps 303, 304). The use of movement tracks improves the ability of the method 300 to discriminate between different objects in the time sequences of images and also facilitates the matching of keypoints in image data from different cameras. Further, an automated determination of the final track pairs, [FTP], is achieved by first determining candidate track pairs, [CTP], in the image data from two cameras (step 305), and then performing a dedicated filtration (steps 306-309) to extract the final track pairs that are deemed to be useful in the extrinsic calibration. The filtration is rendered robust by first determining calibration items representing the relative position (orientation and location) of the cameras based on [CTP], and then generating a total score for each CTP_i in [CTP] by aggregating match scores, which are determined for each CTP_i by use of the calibration items, and finally applying the total score for each CTP_i as a filtration criterion when selecting the final track pairs for [FTP].

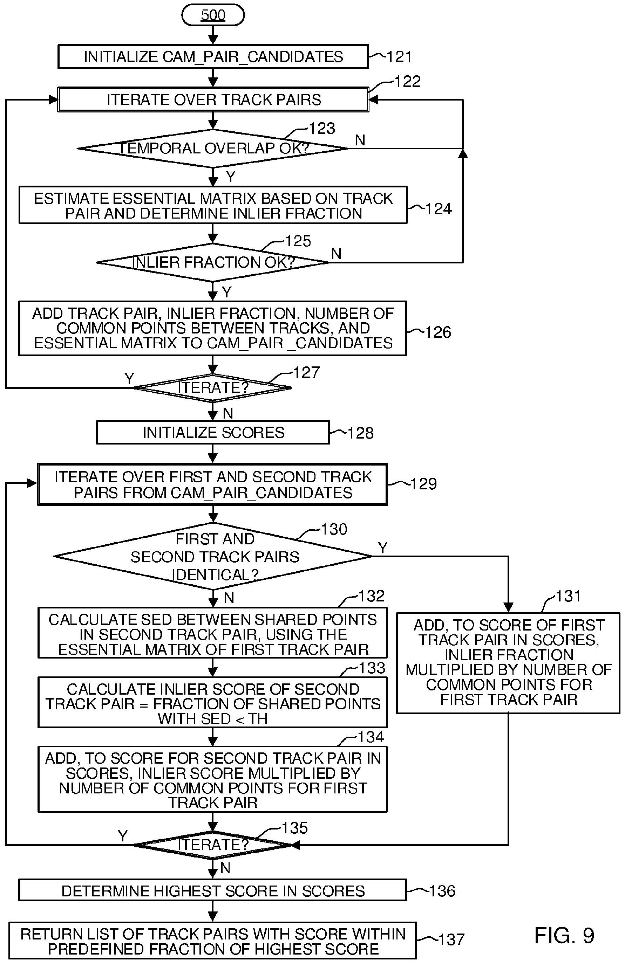

Various embodiments of the steps of the method 300 are described below with reference to FIGS 5-7. A detailed implementation of step 303 will be described further below with reference to FIG. 8, and a detailed implementation of steps 305-309 will be described in relation to a procedure 500 in FIG. 9.

FIG. 5A is a flow chart of an example procedure for determining the set of candidate track pairs, [CTP], as part of step 305 in the method 300. In the illustrated example, the procedure involves both a temporal matching 305A and a spatial matching 305B for determining candidate track pairs.

The temporal matching 305A comprises steps 321-322. In step 321, time points associated with the first movement tracks in [T1] and time points associated with the second movement tracks in [T2] are processed for detection of one or more concurrent pairs of first and second movement tracks. For example, two tracks may be found to be concurrent if they approximately overlap in time, for example if their temporal overlap exceeds a duration threshold. In some embodiments, two tracks are deemed to be concurrent if the start times and/or the end times of the tracks differ by less than a maximum time difference. In step 322, the concurrent pairs are included in [CTP]. The temporal matching is exemplified in FIG. 5B, which shows first tracks T11-T14 detected in images of a first view V1 and second tracks T21-T25 detected in images of a second view V2. Dot dashed lines designate pairs of first and second tracks that found to be concurrent. As seen, no temporally matching first track is found for the second track T23.

The spatial matching 305B comprises steps 331-333. In step 331, the first and second positions in a respective pair of first and second movement tracks from [T1] and [T2] are processed for determination of a preliminary calibration item that represents the relative position (orientation and location) between the first and second cameras. Step 331 may involve processing the respective pair of first and second tracks to determine associated keypoints, assuming that there is a correspondence between the first and second tracks, and then operating an SfM algorithm on the thus-determined associated keypoints to determine the preliminary calibration item. The determination of the preliminary calibration item may be performed by analogy with step 306 as described hereinabove. For example, the preliminary calibration item may be an essential matrix or a fundamental matrix. In step 332, a preliminary match score is determined for the respective pair of first and second tracks, based on the preliminary calibration item for the first and second tracks from step 331 and the first and second positions of the first and second tracks. The preliminary match score represents the spatial correspondence between the first and second tracks. In some embodiments, the preliminary match score is an inlier count or an inlier fraction. In step 333, the pairs of first and second tracks that have been processed by steps 331-332 are selectively included in [CTP] based on the preliminary match score. This means that only pairs with a sufficient spatial correspondence, represented by the preliminary match score, are included in [CTP]. The spatial matching is exemplified in FIG. 5B, where dotted arrows T21', T22', T24', T25' in the first view V1 are reprojections of the second tracks T21, T22, T24, T25 in the second view V2. As seen, the reprojections T21', T22', T24', T25' are closely spatially matched to the first tracks T11, T12, T13, T14. Thereby, the track pairs (T11,T21), (T12,T22), (T13,T24) and (T14,T25) may be added to [CTP].

In some embodiments, step 305 comprises only one of temporal matching or spatial matching.

In some embodiments, for example as shown in FIG. 5A, step 305 comprises both temporal matching and spatial matching. A track pair may be added to [CTP] if the track pair is found to be either temporally matching (by step 305A) or spatially matching (by step 305B). In a variant, a track pair may be added to [CTP] only if the track pair is found to be both temporally matching and spatially matching. In one implementation, steps 305A and 305B are performed in sequence, so that only concurrent pairs from step 305A are processed by step 305B. This reduces the processing load of step 305B, which typically requires more processing operations than step 305A. However, it is also conceivable to perform steps 305B and 305A in sequence, so that only spatially matching tracks are processed by step 305A. This will also reduce processing load.

FIG. 6A is a flow chart of an example procedure for generating the set of match scores, [MS]_i, for a respective candidate track pair, CTP_i, as part of step 307 in the method 300. The procedure in FIG. 6A is thus repeated for each CTP_i in [CTP]. The CTP_i that is being processed may be denoted a "selected candidate track pair". In step 307A, each calibration item in [CI] is operated on the second movement track of the selected candidate track pair to generate a set of representations of the second movement track in the first view, denoted [T2_V1]. As indicated, each calibration item in [CI] may also be operated on the first movement track of the selected candidate track pair to generate a set of representations of the first movement track in the second view, denoted [T1_V2]. In other words, each calibration item results in one representation of the second movement track in the first view and/or one representation of the first movement track in the second view.

In step 307B, the set of match scores, [MS]_i, is calculated to represent the correspondence, in the first view, between the first movement track of the selected candidate track pair and the respective representation in [T2_V1] and/or the correspondence, in the second view, between the second movement track of the selected candidate track pair and the respective representation in [T1_V2]. The match score may be given by any combination or aggregation of the reprojection distances. In some embodiments, the reprojection distance is a symmetric epipolar distance (SED), and the match score is an average of SEDs for the associated keypoints between the first and second movement tracks. Alternatively, as described below, the match score may be given as a function of an inlier fraction, for example calculated as the fraction of the associated keypoints that yield an SED below a distance threshold.

In some embodiments, as shown by dashed lines in FIG. 6A, step 307B comprises steps 341-343. In step 341, reprojection distances are determined for positions of a first movement track in the first view and/or for positions of a second movement track in the second view. In step 342, the number of reprojection distances that are smaller than a distance limit is determined, resulting in an inlier count. The distance limit may be predefined. In step 343, a match score is determined based on the inlier count. For example, the match score may be set to the inlier count or a metric derived thereform, such as an inlier fraction. It is realized that steps 341-343 are performed similar to steps 331-332 (FIG. 5A).

As explained with reference to FIG. 3B, the inlier fraction is the inlier count normalized by the total number of scene points. In the context of step 307, the total number of scene points is equal to the number of associated keypoints between the first and second movement tracks in CTP_i. Each pair of associated keypoints designates a correspondence between a first position in the first movement track and a second position in the second movement track. The associated keypoints are also denoted "common feature points" (CFP) herein, and the number of associated keypoints is designated by #CFP. In some embodiments of step 307, the inlier count is obtained by operating a respective calibration item CI_j from [CI] on the second movement track in CTP_i and by performing the evaluation according to steps 341-342. The inlier fraction is given by the inlier count normalized by #CFP_i, which is the number of associated keypoints between the first and second movement tracks in CTP_i.

FIG. 6B is a flow chart of an example procedure for determining the total score, TS_i, for a respective candidate track pair, CTP_i, based on the set of match scores, [MS]_i that has been determined by step 307 for CTP_i. The procedure in FIG. 6B may be part of step 308 in the method 300. In step 308A, a confidence value is determined for the respective match score in [MS]_i. The confidence value is determined to represent, in a broad sense, the probability that the match score is correct. Phrased differently, the confidence value indicates the degree of uncertainty that is associated with the match score. In step 308B, the match scores in [MS]_i are aggregated by weighting the respective match score by its confidence value. The aggregation of match scores in step 308B may a weighted sum or any alternative thereto, such as a weighted product.

In some embodiments, as shown by dashed lines in FIG. 6B, step 308A comprises steps 351-352. Here, it is assumed that the respective match score is given as an inlier fraction. The respective match score is designated MS_i,j herein and is generated in step 307 by operating calibration item CI_j on the selected candidate track pair, CTP_i. It should be recalled from step 306 that each calibration item in [CI] is generated by processing a respective candidate track pair in [CTP]. Thus, the respective calibration item CI_j originates from an "associated candidate track pair", CTP_j. In step 351, a count is determined of the number of corresponding first and second positions between the first and second movement tracks in the associated candidate track pair, CTP_j. This count is designated as #CFP_j. In step 352, a confidence value CV_i,j for MS_i,j is determined as a function of #CFP_j.

The procedures in FIGS 6A-6B are exemplified in FIG. 6E, which illustrates part of the system in FIG. 4B as operated in accordance with FIGS 6A-6B. Sub-system 42 is configured to perform step 306 (FIG. 4A) to generate CI_j from CTP_j. Sub-system 43 is configured to perform step 307 (FIG. 6A) to generate a match score MS_i,j for CTP_i by use of CI_j from sub-system 42. The match score is an inlier fraction, so an inlier count is determined for the combination CTP_i, CI_j and is normalized by #CFP_i, which is determined from CTP_i. Sub-system 44 comprises a first part 44A, which is configured to perform step 351 (FIG. 6B) to determine #CFP_j based on CTP_j, and step 352 (FIG. 6B) to determine the confidence value CV_i,j based on #CFP_j. A second part 44B of sub-system 44 is configured to perform step 308B (FIG. 6B) to aggregate the match scores MS_i,j received from sub-system 43 by use of the confidence values CV_i,j received from the first part 44A, to produce a total score TS_i for CTP_i.

FIG. 6C is a flow chart of an example procedure for determining the set of final track pairs, [FTP], as part of step 309 in the method 300. In step 309A, a maximum total score for [CTP] is determined based on the total score, TS_i, of the respective candidate track pair, CTP_i, in [CTP]. The maximum total score may be given by the largest TS_i. In step 309B, a candidate track pair is included in [FTP] if the total score of the candidate track pair exceeds a predefined fraction of the maximum total score. Thereby, the selection of candidate track pairs among [CTP] is automatically adjusted to the range of TS_i values. In a variant of step 309B, candidate track pairs are selected by comparing their total score to a predefined limit.

FIG. 6D is a flow chart of an example procedure for detecting and generating movement tracks. The procedure in FIG. 6D will be described with reference to processing of [I1] in step 303 of FIG. 4A but is equally applicable to step 304. In step 303A, a respective image in [I1] is processed for determination of pose data for each object in the image. The pose data comprises positions of predefined features (keypoints) of the respective object. Step 303A may apply any conventional object detection technique and/or feature detection technique, for example as described hereinabove. In step 303B, [I1] is processed for detection of matching pose data between images in [I1]. For example, step 303B may comprise comparing 2D poses between images to identify 2D poses that are sufficiently matched to each other. Step 303B may be limited to comparing 2D poses between two consecutive images. To improve robustness, 2D poses may be compared also between non-consecutive images, for example the matching may be performed across three or four consecutive images. Different criteria may be applied to determine if two 2D poses are sufficiently matched. In one example, an Intersection over Union (IoU) is calculated for the 2D poses and compared to an IoU threshold. The IoU may be calculated as the intersection of the area of bounding boxes for the 2D poses, divided by the union of the area of the bounding boxes. The bounding boxes are defined in the local coordinate system of the respective view (cf. 32 in FIG. 1D). In another example, a pose similarity is calculated for the two 2D poses and compared to a similarity threshold. In some embodiments for calculation of pose similarity, Euclidean distances are calculated between corresponding keypoints in the two 2D poses and stored in a vector, a scale is calculated as the average of the square root of the area of the bounding boxes for the two 2D poses, the vector is divided by the scale, and the average of the vector is calculated to represent pose similarity. Before calculating the average, the vector may be processed for outlier rejection, for example by excluding the largest values in the vector, by excluding values outside a given percentile in the vector, etc. In step 303C, a set of pose data sequences are generated for the matching pose data from step 303B. Thus, in step 303C, the matching poses are tracked over time to form a sequence of 2D poses. Each such sequence corresponds to movement of an object in the scene. In step 303D, the set of first movement tracks, [T1], is generated to represent the set of pose data sequences from step 303C. Step 303D may involve processing the set of pose data sequences from step 303C to detect and discard any pose data sequence that is unlikely to represent an actual object in the scene or is likely to represent an object that is not useful, or might even be harmful, for calibration, for example a person standing in the background. Step 303D may thus filter the set of pose data sequences to improve the accuracy of [T1].

In some embodiments, as shown by dashed lines in FIG. 6D, step 303C comprises a step 361 of terminating a pose data sequence when pose data for one object in one image matches pose data for more than one object in another image. Thus, whenever there is an ambiguity if an object is correctly tracked, the tracking is stopped. By the termination of step 361, the track generation is rendered robust. As indicated in FIG. 6D, a pose data sequence is suitably also terminated whenever no matching pose data is found between images.

In some embodiments, as shown by dashed lines in FIG. 6D, step 303D comprises a step 362 of determining a movement path of each of the pose data sequences in the first view, and a step 363 of evaluating an area covered by the respective movement path in relation to a minimum coverage limit. In step 364, the set of first movement tracks, [T1], is generated represent only the pose data sequences for which the area of the movement path exceeds the minimum coverage limit. The combination of steps 362-364 thus remove movement paths with small extent. This improves the robustness of the track generation. One processing-efficient implementation of step 363 sub-divides the view into smaller bins. For example, a view consisting of 1280 x 720 pixels may be divided into 16 x 9 bins, each consisting of 80 x 80 pixels. In step 363, the movement track is mapped to the bins and the number of points in the movement track that falls into each bin is counted. Then, the fraction of the bins whose count is above a count threshold is determined. The area of the movement path is deemed to exceed the minimum coverage limit if the fraction exceeds a fraction limit.

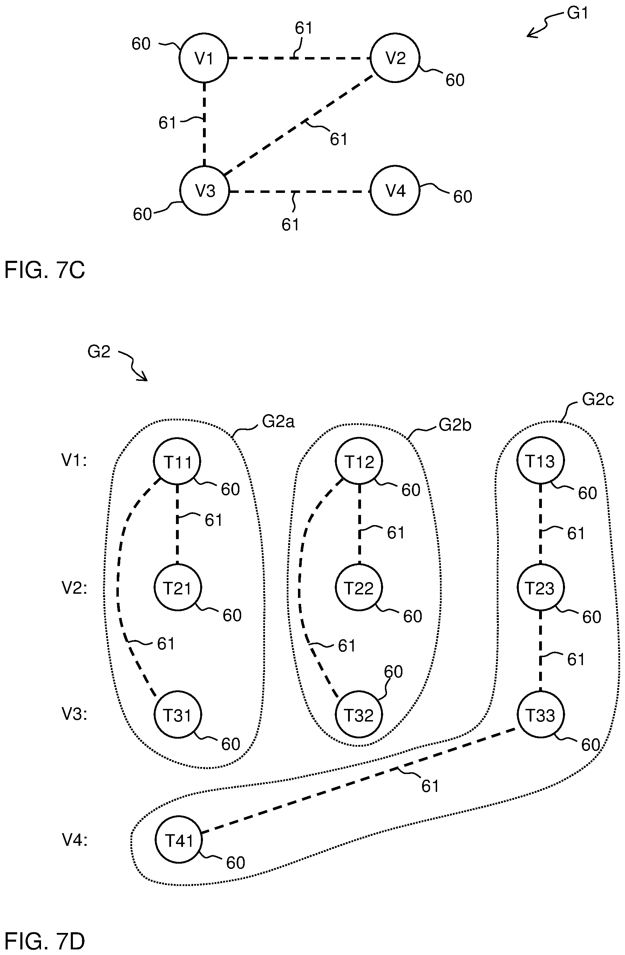

FIG. 7A is a flow chart of an example validation procedure that may be part of the validation step 310 in the method 300. The procedure will be described with reference to FIG. 7C. The validation procedure presumes that the monitoring system comprises at least three cameras and that the method 300 is performed to determine an [FTP] for each combination of two cameras among the cameras in the monitoring system. In step 371, each camera (or equivalently, view) is represented by a node. In step 372, connections are added between the nodes in correspondence with the final track pairs in all [FTP]s to form an evaluation graph. An example of the result of steps 371-372 is shown in FIG. 7C, in which the monitoring system includes four cameras that define a respective view V1-V4 onto the scene. The evaluation graph G1 is formed by representing each view as a node 60 and by defining connections 61 based on the final track pairs in all [FTP]s. In step 373, the evaluation graph G1 is evaluated to determine if it is a connected graph. If so, the [FTP]s are accepted and passed for output (step 374). If not, an error message is generated to indicate that the validation has failed (step 375). The term connected graph is used in its conventional meaning and designates graph in which there is a path joining each pair of nodes 60, where the path comprises one or more connections 61. The evaluation graph G1 in FIG. 7C is a connected graph.

FIG. 7B is a flow chart of another validation procedure that may be part of the validation step 310 in the method 300, instead of or in combination with the validation procedure of FIG. 7A. The procedure in FIG. 7B will be described with reference to FIG. 7D. The validation procedure presumes that the method 300 is performed to determine an [FTP] for each combination of two cameras among the cameras in the monitoring system. As understood from the foregoing, each [FTP] implicitly or explicitly associates tracks with cameras, since the final track pairs in the respective [FTP] are detected in images from two cameras. In step 381, a nodes of an evaluation graph is defined based on the [FTP]s. Specifically, each node corresponds to a unique combination of a track and a camera in the [FTP]s. In step 382, connections are added in correspondence with the final pairs in the [FTP]s to define the evaluation graph.

An example of an evaluation graph G2 is shown in FIG. 7D, in which tracks T11-T13 are detected in view V1, tracks T21-T23 are detected in view V2, tracks T13-T33 are detected in view V4, and track T41 is detected in view V4. It is realized that the method 300 may produce six [FTP]s for different combinations of two cameras (views), provided that all views overlap each other. The connections 61 represent the final track pairs that are included in these [FTP]s. As seen the graph includes three connected sub-graphs G2a, G2b, G2c, which are unconnected from each other.

Reverting to FIG. 7B, in step 383, the [FTP]s are processed for detection of temporally overlapping tracks in one and the same view. The processing in step 383 is based on time points associated with the tracks in the [FTP]s. The required degree of temporal overlap may vary depending on implementation, ranging from complete temporal overlap of the tracks, to any temporal overlap of the tracks. In step 384, each set of temporally overlapping tracks from step 383 is mapped to the evaluation graph from step 382 to verify that the temporally overlapping tracks are unconnected in the evaluation graph. This means, in the context of FIG. 7D, that the temporally overlapping tracks in a view should be mapped to different sub-graphs G2a, G2b, G2c. If so, the [FTP]s are accepted and passed for output (step 385). If not, an error message is generated to indicate that the validation has failed (step 386).

FIG. 8 is a flow chart of a detailed implementation example of a procedure for track generation. The procedure in FIG. 8 will be described with reference to processing of [I1] in step 303 of FIG. 4A but is equally applicable to step 304. The procedure presumes that [I1] contains images from a first time point to a last time point, at any suitable time interval. Further, by analogy with step 303A in FIG. 6D, each image in [I1] has been processed to determine all 2D poses in the image at the associated time point, and the 2D poses are stored as a function of time point in a dedicated data structure.

The procedure in FIG. 8 comprises three nestled loops or iterations. An outer loop (first loop) is formed between step 102 and step 117 and is repeated for consecutive time points, for the first time point to the last time point. An inner loop (second loop) is formed between step 104 and step 113 and is repeated over the items in ACTIVE_TRACKS (see below). The innermost loop (third loop) is formed between step 106 and step 109 and is repeated over the items in POSE_CANDIDATES (see below). In the context of FIG. 8, iterating over a list that is empty means that the iteration is skipped.

In step 101, a first list FOUND_TRACKS and a second list ACTIVE_TRACKS are initialized. The first list is configured to store all completed tracks that are found. Each track contains a temporal sequence of 2D poses. The second list is configured to store all tracks that can still be extended. Each track in the second list contains the temporal sequence of 2D poses determined so far, and the time point of the last (most recent) 2D pose in the temporal sequence. In step 101, the first and second lists are empty.

The first loop is started in step 102, and the current time point is set to the first time point. In step 103, a third list POSE_CANDIDATES is populated to include all 2D poses at the current time point. These 2D poses are denoted "candidate poses". In step 104, the second loop is started and items are sequentially retrieved from ACTIVE_TRACKS. Each such item is thus an active track at the current time point (given by the first loop). Although not shown in FIG. 8, the first time point is treated separately, by skipping from step 104 to step 117, so that a new active track is added to ACTIVE_TRACKS for each candidate pose in POSE _CANDIDATES. For all other time points, step 104 proceeds to step 105, in which an empty list TRACK_CANDIDATES is initialized. In step 106, the third loop is started to sequentially retrieve candidate poses from POSE_CANDIDATES. In step 107, the candidate pose is matched to the active track given by the second loop. If the candidate pose given by the third loop is found to be similar to the last (most recent) pose in the active track and if the active track was recently updated, the candidate pose is added to TRACK_CANDIDATES in step 108. If not, another candidate pose is retrieved from POSE_CANDIDATES by the third loop in step 106. The third loop is stopped when all candidate poses in POSE_CANDIDATES have been processed. Then, in step 110, the length of TRACK_CANDIDATES is evaluated. If the length equals 1, which means that there is only one item in TRACK_CANDIDATES, the procedure proceeds to step 111. In step 111, the active track in ACTIVE_TRACKS is extended with the candidate pose, and the candidate pose is removed from POSE_CANDIDATES. In step 112, the current time point is compared to the last time point. If there are further time points to be processed, and if there is at least one further active track to be processed in ACTIVE_TRACKS, the second loop is operated to retrieve another active track from ACTIVE_TRACKS in step 104. In step 112, if the current time point is the last time point, the active track is terminated by step 112 proceeding to step 114. Returning to step 110, if the length of TRACK_CANDIDATES does not equal 1, the active track likewise terminated by step 110 proceeding to step 114. The length may be zero (0) if no candidate pose is found by step 107 in the third loop, or larger than 1 if plural candidate poses are found by step 107 in the third loop. In step 114, the extent of the active track is evaluated (cf. step 363 in FIG. 6D). If the extent is found insufficient in step 114, the active track is discarded and thus removed from ACTIVE_TRACKS in step 116. If the extent is found sufficient in step 114, the active track is moved from ACTIVE_TRACKS to FOUND_TRACKS and the procedure proceeds to step 113. If there is at least one further active track to be processed in ACTIVE_TRACKS, step 113 proceeds to step 104, in which another active track is retrieved from ACTIVE_TRACKS. If all active tracks in ACTIVE_TRACKS have been processed, step 113 proceeds to step 117. In step 117, each remaining pose (if any) in POSE_CANDIDATES is added as a new active track in ACTIVE_TRACKS. In step 118, if the current time point is not the last time point, the first loop is operated to increment the current time point in step 102. If the current time point is the last time point in step 118, FOUND_TRACKS is output in step 119. It is realized that FOUND_TRACKS corresponds to [T1] in FIG. 4A.

FIG. 9 is a flow chart of a detailed implementation example of the procedure 500 in FIG. 4A, which comprises steps 305-309 in the method 300. The procedure 500 is designed to minimize duplication of calculations. The procedure 500 operates on [T1], [T2], which contain time sequences of 2D poses.

In step 121, an empty list CAM_PAIR_CANDIDATES is initialized. A first loop is formed between step 122 and step 127. The first loop is repeated for all track pairs formed between the tracks in [T1] and the tracks in [T2]. In step 123, a temporal matching is performed (cf. step 305A in FIG. 5A) by evaluating the temporal overlap between the tracks in the track pair from step 122. If the temporal overlap is deemed insufficient in step 123, another track pair is selected in step 122. Otherwise, a spatial matching is performed (cf. step 305B in FIG. 5A) in steps 124-125. In step 124, the essential matrix is estimated by use of the track pair, and the inlier fraction is determined by use of the essential matrix. Alternatively, inlier count may be used instead of inlier fraction. In relation to step 305B in FIG. 5A, the essential matrix corresponds to the preliminary calibration item, and the inlier fraction corresponds to the preliminary match score. In step 125, the inlier fraction is evaluated in relation to a limit value. If the inlier fraction is above the limit value, the track pair and the inlier fraction are added to CAM_PAIR_CANDIDATES in step 126. Otherwise, another track pair is selected in step 122. Step 126 also comprises determining the number of common feature points between the tracks (cf. #CFP), which is also added to CAM_PAIR_CANDIDATES together with the essential matrix from step 124. It is realized that step 126 forms a centralized step for calculation of intermediate data to be used by subsequent steps of the procedure 500. The procedure 500 repeats the first loop until all track pairs have been processed. When the first loop is completed, CAM_PAIR_CANDIDATES corresponds to [CTP] produced by step 305 (FIG. 4A).

In step 128, an empty list SCORES is initialized. This list is configured to contain a score for each track pair in CAM_PAIR_CANDIDATES. A second loop is formed between step 129 and step 135. The second loop is repeated for all combinations of two track pairs in CAM_PAIR_CANDIDATES. In the following, the track pairs in the current combination selected by step 129 is denoted first track pair and second track pair. In step 130, a check is made if the first and second track pairs are identical. If so, step 131 is performed. Otherwise, if the first and second track pairs are not the same, steps 132-134 are performed. Step 130 is introduced to facilitate re-use of calculations. In step 131, values of the inlier fraction and the number of common feature points for the first (or second) track pair are retrieved from CAM_PAIR_CANDIDATES. These values are multiplied and the result is added to the score of the first (or second) track pair and the procedure proceeds to step 135. If there is at least one further combination of track pairs to be processed, step 135 proceeds to step 129 for selection of another track pair combination. In step 132, the symmetrical epipolar distance (SED) is calculated between shared points in the second track pair, using the essential matrix of the first track pair. The shared points are common feature points between the tracks in the second track pair. The essential matrix is retrieved from CAM_PAIR_CANDIDATES. In step 133, an inlier score is calculated for the second track pair. The inlier score is given as the fraction of the common feature points that result in an SED below a distance threshold. Thus, the inlier score is calculated as an inlier fraction. In step 134, the number of common feature points for the first track pair is calculated and multiplied with the inlier score from step 133. The result is added to the score for the second track pair in SCORES and the procedure proceeds to step 135. It is to be noted that the second loop in FIG. 9 implements steps 307-309 in FIG. 4A in a nestled fashion. For example, the aggregation of step 308 is performed by the additions by steps 131, 134. Thus, when the second loop is completed, SCORES contains TS_i for all track pairs in CAM_PAIR_CANDIDATES.

After completion of the second loop, the highest score in SCORES is determined in step 136. Then, in step 137, an output list is generated to contain the track pairs that have a score within a predefined fraction of the highest score (cf. step 309 in FIG. 6C).

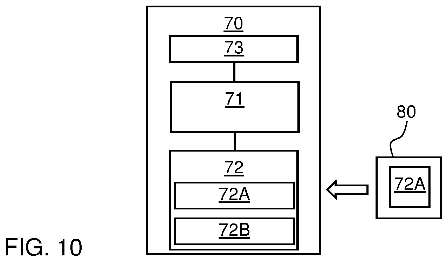

The structures and methods disclosed herein may be implemented by hardware or a combination of software and hardware. In some embodiments, such hardware comprises one or more software-controlled computer resources. FIG. 10 schematically depicts such a computer resource 70, which comprises a processing system 71 and computer memory 72 that define logic for controlling the operation of the computer resource 70. The computer resource 70 further comprises an interface 73 for input and/or output of data. The interface 73 may be configured for wired and/or wireless communication, including communication with the detection device 3 and/or the cameras 2 (FIG. 1A). Alternatively or additionally, the interface 73 may be configured to receive user input, for example via a user interface. The processing system 71 may e.g. include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). A control program 72A comprising computer instructions is stored in the memory 72 and executed by the processing system 51 to perform any of the methods, operations, procedures, functions, or steps described herein. As indicated in FIG. 10, the memory 72 may also store control data 72B for use by the processing system 72, for example various predefined values such as thresholds, limits, etc. The control program 72A may be supplied to the computing resource 70 on a computer-readable medium 80, which may be a tangible (non-transitory) product (e.g. magnetic medium, optical disk, read-only memory, flash memory, etc.) or a propagating signal.

The techniques disclosed and exemplified herein have a variety of applications such as 3D vision inspection, product assembly, goods inspection, human-computer interaction, video surveillance, sports broadcasting, industry robot control, navigation, etc.

In the following, clauses are recited to summarize some aspects and embodiments as disclosed in the foregoing.

C1. A computer-implemented method for extrinsic calibration of a plurality of cameras comprising a first camera and a second camera, said computer-implemented method comprising: obtaining a first time sequence of images taken by the first camera of a first view; obtaining a second time sequence of images taken by the second camera of a second view, wherein the second view at least partly overlaps the first view; processing the first time sequence of images for detection of a set of first movement tracks for a first set of objects, each of the first movement tracks comprising a plurality of first positions within the first view; processing the second time sequence of images for detection of a set of second movement tracks for a second set of objects, each of the second movement tracks comprising a plurality of second positions within the second view; evaluating the set of first movement tracks in relation to the set of second movement tracks to determine a set of candidate pairs of first and second movement tracks, each of the candidate pairs being deemed to originate from a common object in the first and second views; processing the set of candidate pairs to determine a set of calibration items, wherein a respective calibration item in the set of calibration items represents a relative position, given by a respective candidate pair, between the first and second cameras; operating the set of calibration items on said each of the candidate pairs in the set of candidate pairs to generate a respective set of match scores for said each of the candidate pairs; determining a total score for said each of the candidate pairs by aggregating the match scores in the respective set of match scores; determining a set of final pairs of first and second movement tracks among the set of candidate pairs based on the total score for said each of the candidate pairs; and determining, based on the set of final pairs, final calibration data that represents the relative position between the first and second cameras.

C2. The method of C1, wherein said evaluating the set of first movement tracks in relation to the set of second movement tracks comprises: processing time points associated with the first and second movement tracks to detect concurrent pairs of first and second movement tracks; and including each of the concurrent pairs as a candidate pair in the set of candidate pairs.

C3. The method of C1 or C2, wherein said evaluating the set of first movement tracks in relation to the set of second movement tracks comprises: processing, for each pair of first and second movement tracks, the plurality of first and second positions to determine a preliminary calibration item that represents the relative position between the first and second cameras; determining, for said each pair of first and second movement tracks, a preliminary match score based on the preliminary calibration item and the plurality of first and second positions; and selectively including, based on the preliminary match score, said each pair of first and second movement tracks as a candidate pair in the set of candidate pairs.

C4. The method of any preceding clause, wherein said operating the set of calibration items on said each of the candidate pairs comprises: operating each calibration item in the set of calibration items on the second movement track of a selected candidate pair to generate a set of representations of the second movement track in the first view; and calculating a set of match scores to represent a correspondence, in the first view, between the first movement track of the selected candidate pair and a respective representation of the second movement track of the selected candidate pair.

C5. The method of C4, wherein the respective representation comprises a plurality of transformed positions, which corresponds to the plurality of second positions of the second movement track, wherein said calculating the set of match scores comprises: determining distances between pairs of first positions and transformed positions in the first view; determining an inlier count of the distances that are smaller than a distance limit, and determining a match score based on the inlier count.

C6. The method of any preceding clause, wherein said processing the first time sequence of images comprises: processing a respective image in the first time sequence of images for determination of pose data for a respective object in the respective image, said pose data comprising a plurality of positions of predefined features of the respective object; processing the first time sequence of images for detection of matching pose data between images in the first time sequence; generating a set of pose data sequences for the matching pose data; and generating the set of first movement tracks to represent the set of pose data sequences.

C7. The method of C6, wherein said generating the set of pose data sequences comprises: terminating a respective pose data sequence when pose data for one object in one image matches pose data for more than one object in another image.

C8. The method of C6 or C7, wherein said generating the set of first movement tracks comprises: determining a movement path of each of the pose data sequences in the first view; evaluating an area covered by the movement path in relation to a minimum coverage limit; and generating the set of first movement tracks to represent the pose data sequences for which the area of the movement path exceeds the minimum coverage limit.

C9. The method of any preceding clause, wherein said determining the set of final pairs comprises: determining a maximum total score based on a total score of a respective candidate pair in the set of candidate pairs; and including the respective candidate pair in the set of final pairs if the total score of the respective candidate pair exceeds a predefined fraction of the maximum total score.

C10. The method of any preceding clause, wherein said determining the total score for the respective candidate pair comprises: determining a confidence value for a respective match score in the set of match scores; and weighting, in said aggregating, the respective match score by its confidence value.

C11. The method of C10, wherein the respective set of match scores is determined for a selected candidate pair among the set of candidate pairs , and wherein a respective match score in the respective set of match scores is determined by use of a respective calibration item in the set of calibration items, the respective calibration item being determined by processing an associated candidate pair among the set of candidate pairs, wherein said determining the confidence value comprises: obtaining a number count of corresponding first and second positions between the first and second movement tracks in the associated candidate pair; and determining the confidence value for the respective match score as a function of the number count.

C12. The method of C11, wherein the respective match score is an inlier fraction, said inlier fraction being given by an inlier count normalized by a further number count of corresponding first and second positions between the first and second movement tracks in the selected candidate pair, wherein the inlier count is determined by: operating the associated calibration item on the second movement track of the selected candidate pair to generate a representation of the second movement track in the first view and/or operating the associated calibration item on the first movement track of the selected candidate pair to generate a representation of the first movement track in the second view; determining reprojection distances as a function of differences between the first movement track and the representation of the second movement track and/or differences between the second movement track and the representation of the first movement track; and determining the inlier count as a count of the reprojection distances that are smaller than a distance limit.

C13. The method of any preceding clause, wherein the plurality of cameras comprises one or more further cameras, wherein the method is performed to determine the set of final pairs for each combination of two cameras among the plurality of cameras, and wherein the method further comprises: verifying that all sets of final pairs jointly define a connected graph, wherein nodes in the connected graph correspond to a respective camera among the plurality of cameras and connections between nodes correspond to the final pairs in said all sets of final pairs.

C14. The method of any preceding clause, which is performed to determine the set of final pairs for each combination of two cameras among the plurality of cameras, wherein the set of final pairs associates each movement track with a respective camera among the two cameras, wherein the method further comprises: representing all sets of final pairs by a graph comprising nodes and connections between the nodes, wherein a respective node in the graph corresponds to a camera and an associated movement track, and wherein the connections between the nodes correspond to the final pairs in said all sets of final pairs; processing said all sets of final pairs, based on time points associated with the final pairs, for detection of movement tracks that overlap in time and are associated with a common camera among the plurality of cameras; and verifying that the movement tracks that overlap in time are unconnected to each other in the graph.

C15. The method of any preceding clause, wherein the respective calibration item is an essential matrix or a fundamental matrix.

C16. The method of any preceding clause, wherein each of the first and second movement tracks represents a time sequence of pose data items for a respective object in the first view and the second view, respectively, wherein a respective pose data item in the first movement track comprises a respective first subset of the plurality of first positions, wherein the respective first subset represents a plurality of predefined features of the respective object, and wherein a respective pose data item in the second movement track comprises a respective second subset of the plurality of second positions, wherein the respective second subset represents the plurality of predefined features of the respective object.

C17. A computer-readable medium comprising instructions, which when executed by a processor, causes the processor to perform a method according to any one of C1-C16.

C18. A device configured for extrinsic calibration of a plurality of cameras comprising a first camera and a second camera, said device comprising logic configured to operate the device to: obtain a first time sequence of images taken by the first camera of a first view; obtain a second time sequence of images taken by the second camera of a second view, wherein the second view at least partly overlaps the first view; process the first time sequence of images for detection of a set of first movement tracks for a first set of objects, each of the first movement tracks comprising a plurality of first positions within the first view; process the second time sequence of images for detection of a set of second movement tracks for a second set of objects, each of the second movement tracks comprising a plurality of second positions within the second view; evaluate the set of first movement tracks in relation to the set of second movement tracks to determine a set of candidate pairs of first and second movement tracks, each of the candidate pairs being deemed to originate from a common object in the first and second views; process the set of candidate pairs to determine a set of calibration items, wherein a respective calibration item in the set of calibration items represents a relative position, given by a respective candidate pair, between the first and second cameras; operate the set of calibration items on said each of the candidate pairs in the set of candidate pairs to generate a respective set of match scores for said each of the candidate pairs; determine a total score for said each of the candidate pairs by aggregating the match scores in the respective set of match scores; determine a set of final pairs of first and second movement tracks among the set of candidate pairs based on the total score for said each of the candidate pairs; and determine, based on the set of final pairs, final calibration data that represents the relative position between the first and second cameras.

## Claims

1. A computer-implemented method for extrinsic calibration of a plurality of cameras (2) comprising a first camera and a second camera, said computer-implemented method comprising:
obtaining (301) a first time sequence of images ([I1]) taken by the first camera of a first view;
obtaining (302) a second time sequence of images ([I2]) taken by the second camera of a second view, wherein the second view at least partly overlaps the first view;
processing (303) the first time sequence of images for detection of a set of first movement tracks ([T1]) for a first set of objects, each of the first movement tracks comprising a plurality of first positions within the first view;
processing (304) the second time sequence of images for detection of a set of second movement tracks ([T2]) for a second set of objects, each of the second movement tracks comprising a plurality of second positions within the second view;
evaluating (305) the set of first movement tracks in relation to the set of second movement tracks to determine a set of candidate pairs ([CTP]) of first and second movement tracks, each of the candidate pairs being deemed to originate from a common object in the first and second views;
processing (306) the set of candidate pairs to determine a set of calibration items ([CI]), wherein a respective calibration item in the set of calibration items represents a relative position, given by a respective candidate pair (CTP_i), between the first and second cameras;
operating (307) the set of calibration items on said each of the candidate pairs in the set of candidate pairs ([CTP]) to generate a respective set of match scores ([MS]_i) for said each of the candidate pairs;
determining (308) a total score (TS_i) for said each of the candidate pairs by aggregating the match scores in the respective set of match scores;
determining (309) a set of final pairs ([FTP]) of first and second movement tracks among the set of candidate pairs based on the total score for said each of the candidate pairs; and
determining (400), based on the set of final pairs, final calibration data (FCD) that represents the relative position between the first and second cameras.

2. The method of claim 1, wherein said evaluating (305) the set of first movement tracks ([T1]) in relation to the set of second movement tracks ([T2]) comprises:
processing (321) time points associated with the first and second movement tracks to detect concurrent pairs of first and second movement tracks; and
including (322) each of the concurrent pairs as a candidate pair (CTP_i) in the set of candidate pairs ([CTP]).

3. The method of claim 1 or 2, wherein said evaluating (305) the set of first movement tracks ([T1]) in relation to the set of second movement tracks ([T2]) comprises:
processing (331), for each pair of first and second movement tracks, the plurality of first and second positions to determine a preliminary calibration item that represents the relative position between the first and second cameras;
determining (332), for said each pair of first and second movement tracks, a preliminary match score based on the preliminary calibration item and the plurality of first and second positions; and
selectively including (333), based on the preliminary match score, said each pair of first and second movement tracks as a candidate pair (CTP_i) in the set of candidate pairs ([CTP]).

4. The method of any preceding claim, wherein said operating (307) the set of calibration items ([CI]) on said each of the candidate pairs comprises:
operating (307A) each calibration item in the set of calibration items ([CI]) on the second movement track of a selected candidate pair to generate a set of representations of the second movement track in the first view; and
calculating (307B) a set of match scores ([MS]_i]) to represent a correspondence, in the first view, between the first movement track of the selected candidate pair and a respective representation of the second movement track of the selected candidate pair.

5. The method of claim 4, wherein the respective representation comprises a plurality of transformed positions, which corresponds to the plurality of second positions of the second movement track, wherein said calculating (307B) the set of match scores comprises:
determining (341) distances between pairs of first positions and transformed positions in the first view;
determining (342) an inlier count of the distances that are smaller than a distance limit; and
determining (343) a match score based on the inlier count.

6. The method of any preceding claim, wherein said processing (303) the first time sequence of images ([I1]) comprises:
processing (303A) a respective image in the first time sequence of images ([I1]) for determination of pose data for a respective object in the respective image, said pose data comprising a plurality of positions of predefined features (K1-K14) of the respective object;
processing (303B) the first time sequence of images ([I1]) for detection of matching pose data between images in the first time sequence;
generating (303C) a set of pose data sequences for the matching pose data; and
generating (303D) the set of first movement tracks ([T1]) to represent the set of pose data sequences.

7. The method of claim 6, wherein said generating (303C) the set of pose data sequences comprises: terminating (361) a respective pose data sequence when pose data for one object in one image matches pose data for more than one object in another image.

8. The method of claim 6 or 7, wherein said generating (303D) the set of first movement tracks ([T1]) comprises:
determining (362) a movement path of each of the pose data sequences in the first view;
evaluating (363) an area covered by the movement path in relation to a minimum coverage limit; and
generating (364) the set of first movement tracks ([T1]) to represent the pose data sequences for which the area of the movement path exceeds the minimum coverage limit.

9. The method of any preceding claim, wherein said determining (309) the set of final pairs comprises:
determining (309A) a maximum total score based on a total score (TS_i) of a respective candidate pair (CTP_i) in the set of candidate pairs ([CTP]); and
including (309B) the respective candidate pair (CTP_i) in the set of final pairs ([FTP]) if the total score (TS_i) of the respective candidate pair (CTP_i) exceeds a predefined fraction of the maximum total score.

10. The method of any preceding claim, wherein said determining (308) the total score (TS_i) for the respective candidate pair comprises:
determining (308A) a confidence value for a respective match score in the set of match scores; and
weighting (308B), in said aggregating, the respective match score by its confidence value.

11. The method of claim 10, wherein the respective set of match scores ([MS]_i) is determined for a selected candidate pair (CTP_i) among the set of candidate pairs ([CTP]), and wherein a respective match score (MS_i,j) in the respective set of match scores ([MS]_i) is determined by use of a respective calibration item (CI_j) in the set of calibration items ([CI]), the respective calibration item (CI_j) being determined by processing an associated candidate pair (CTP_j) among the set of candidate pairs ([CTP]), wherein said determining the confidence value comprises:
obtaining (351) a number count (#CFP_j) of corresponding first and second positions between the first and second movement tracks in the associated candidate pair (CTP_j); and
determining (352) the confidence value for the respective match score (MS_i,j) as a function of the number count (#CFP_j).

12. The method of any preceding claim, wherein the plurality of cameras comprises one or more further cameras, wherein the method is performed to determine the set of final pairs for each combination of two cameras among the plurality of cameras, and wherein the method further comprises:
verifying (373) that all sets of final pairs ([FTP]) jointly define a connected graph (G1), wherein nodes (60) in the connected graph correspond to a respective camera among the plurality of cameras and connections (61) between nodes correspond to the final pairs in said all sets of final pairs.

13. The method of any preceding claim, which is performed to determine the set of final pairs ([FTP]) for each combination of two cameras among the plurality of cameras, wherein the set of final pairs ([FTP]) associates each movement track with a respective camera among the two cameras, wherein the method further comprises:
representing (381, 382) all sets of final pairs ([FTP]) by a graph (G2) comprising nodes (60) and connections (61) between the nodes (60), wherein a respective node (60) in the graph (G2) corresponds to a camera and an associated movement track, and wherein the connections (61) between the nodes (60) correspond to the final pairs in said all sets of final pairs ([FTP]);
processing (383) said all sets of final pairs ([FTP]), based on time points associated with the final pairs, for detection of movement tracks that overlap in time and are associated with a common camera among the plurality of cameras; and
verifying (384) that the movement tracks that overlap in time are unconnected to each other in the graph (G2).

14. A computer-readable medium comprising instructions, which when executed by a processor, causes the processor to perform a method according to any one of claims 1-13.

15. A device configured for extrinsic calibration of a plurality of cameras comprising a first camera and a second camera, said device comprising logic (51, 52) configured to operate the device to:
obtain a first time sequence of images ([I1]) taken by the first camera of a first view;
obtain a second time sequence of images ([I2]) taken by the second camera of a second view, wherein the second view at least partly overlaps the first view;
process the first time sequence of images for detection of a set of first movement tracks ([T1]) for a first set of objects, each of the first movement tracks comprising a plurality of first positions within the first view;
process the second time sequence of images for detection of a set of second movement tracks ([T2]) for a second set of objects, each of the second movement tracks comprising a plurality of second positions within the second view;
evaluate the set of first movement tracks in relation to the set of second movement tracks to determine a set of candidate pairs ([CTP]) of first and second movement tracks, each of the candidate pairs being deemed to originate from a common object in the first and second views;
process the set of candidate pairs to determine a set of calibration items ([CI]), wherein a respective calibration item in the set of calibration items represents a relative position, given by a respective candidate pair (CTP_i), between the first and second cameras;
operate the set of calibration items on said each of the candidate pairs in the set of candidate pairs ([CTP]) to generate a respective set of match scores ([MS]_i)for said each of the candidate pairs;
determine a total score (TS_i) for said each of the candidate pairs by aggregating the match scores in the respective set of match scores;
determine a set of final pairs ([FTP]) of first and second movement tracks among the set of candidate pairs based on the total score for said each of the candidate pairs; and
determine, based on the set of final pairs, final calibration data (FCD) that represents the relative position between the first and second cameras.
